(19) **Europäisches Patentamt**
**European Patent Office**
**Office européen des brevets**

(11) **EP 1 364 471 B1**

(12) **EUROPEAN PATENT SPECIFICATION**

(45) Date of publication and mention
of the grant of the patent:
**18.04.2012 Bulletin 2012/16**

(51) Int Cl.:
*H04J 13/00* (2011.01)    *H04B 1/7115* (2011.01)

(21) Application number: **02712143.3**

(22) Date of filing: **14.02.2002**

(86) International application number:
**PCT/IB2002/000463**

(87) International publication number:
**WO 2002/067455 (29.08.2002 Gazette 2002/35)**

(54) **MULTICODE RAKE RECEIVER IN A MOBILE STATION**

MULTICODE RAKE EMPFÄNGER IN EINER MOBILSTATION

RECEPTEUR RAKE MULTICODE DANS UNE STATION MOBILE

(84) Designated Contracting States:
**AT BE CH CY DE DK ES FI FR GB GR IE IT LI LU MC NL PT SE TR**

(30) Priority: **21.02.2001 DE 10108413**

(43) Date of publication of application:
**26.11.2003 Bulletin 2003/48**

(73) Proprietor: **ST-Ericsson SA**
**1228 Plan-les-Ouates (CH)**

(72) Inventor: **HEINLE, Frank**
**NL-5656 AA Eindhoven (NL)**

(74) Representative: **Long, Giorgio et al**
**Jacobacci & Partners S.p.A.**
**Via Senato 8**
**20121 Milano (IT)**

(56) References cited:
**EP-A- 0 642 243    EP-A- 0 661 831**

• **RIAZ ESMAILZADEH ET AL: "PRE-RAKE DIVERSITY COMBINATION FOR DIRECT SEQUENCE SPREAD SPECTRUM MOBILE COMMUNICATIONS SYSTEMS" IEICE TRANSACTIONS ON COMMUNICATIONS, INSTITUTE OF ELECTRONICS INFORMATION AND COMM. ENG. TOKYO, JP, vol. E76-B, no. 8, 1 August 1993 (1993-08-01), pages 1008-1014, XP000396906 ISSN: 0916-8516**

**Description**

The invention relates to a reception method for a mobile telephone, in particular having a RAKE receiver, with multicode reception, and a mobile telephone suitable for this purpose.

Mobile telephones with multicode reception (CDMA) normally operate with a RAKE receiver. In the case of the latter, not only is the signal received on a direct link evaluated, but so too is the signal reflected via indirect paths. The physical channel between the master station and the mobile telephone thereby comprises the direct link and reflection links. This increases the portion of the transmit power of the station that is processed by the mobile telephone. In order to evaluate the directly incoming useful signal and the portions of the useful signals incoming via reflection links, a plurality of processing paths, what are termed fingers, are provided in the RAKE receiver. As a rule, a plurality of fingers are provided for the physical transceiver channel. Such a RAKE receiver is described, for example, in the dissertation by Peter Schramm, Universität Erlangen-Nürnberg dated 04.17.1996, Shaker Verlag, Aachen 1996.

Various coding methods are known. In the CDMA method of interest here, the digitized transmitted signal comprises a plurality of user signals which differ from one another by orthogonal codes. The CDMA (Code Division Multiple Access) method is described, for example, in the textbook by Niels Klußmann: Lexikon der Kommunikations- und Informationstechnik, Heidelberg, Hüthig, 1997, pages 72 and 73. In the CDMA method, a narrow-band signal is spread by a spread factor with the aid of one of the above-named codes to form a broadband signal by virtue of the fact that a digital data stream that is to be transmitted is not transmitted as a sequence of the bit values 0 and 1, but the digital useful data values 0 and 1 are represented by a sequence ofN, likewise binary symbols, also termed code chips or sub-bits. The N-digit sequence of the code chips for the 0 and the 1 is respectively inverted in this case. Finally, the entire sequence of the code chips is transmitted.

In the case of UMTS (Universal Mobile Telecommunication System, compare said textbook, page 495), which is provided for introduction into practical use, it is provided that a single user (mobile telephone) can receive more than one orthogonal code. The same spread factor and the same relative transmit power are prescribed for all these codes.

Consequently, it is obvious to provide a plurality of RAKE receivers in the mobile telephone in accordance with the number of orthogonal codes to be received. The computational outlay, and thus the energy consumption and the space requirement on the integrated circuit of the mobile telephone would therefore rise considerably.

Document EP 0661831 A relates to a sync acquisition and tracking technique for direct sequence spread spectrum receivers of cellular mobile communications systems. Particularly, the document describes a direct spread spectrum receiver capable of establishing quick synchronization under varying signal levels.

Document EP 0642243 A describes a CDMA radio communication system comprising a rake receiver, such system operating to support a multiplicity of codes over the same link without increasing complexity.

It is the object of the invention to specify a reception method and a mobile telephone of the type named at the beginning with the aid of which it is possible to reduce the outlay in the case of double coding or multicoding of the Mobile telephone.

The above object is achieved according to the invention by means of the features of method claim 1 and of mobile telephone claim 6.

The solution according to the invention has essentially the following advantages:

a) There is a need for only one RAKE receiver per finger for receiving each time two codes.
In one version, in which transmission is performed with the aid of a double code, there is thus a saving of one RAKE receiver per finger. If the RAKE receiver has six fingers, for example,
six RAKE receivers are thus saved.
b) The only one RAKE receiver need execute only fewer operations, as shown in the table given below. The result overall is a reduced power consumption of the mobile telephone and
a reduced space requirement on the integrated circuit (baseband circuit).
c) The reduction in complexity does not lead to a reduction in performance of the mobile telephone.

The method described can be used not only in the case of UMTS, but in the case of any CDMA system - assuming the same spread factor and the same relative power of the codes to be received.

Advantageous embodiments of the invention are disclosed in the hollowing description and the dependent claims 2-5 and 7. In the drawing:

Figure 1 shows a block diagram of an obvious reception method in the case of two codes with a RAKE receiver, only one finger being shown,
Figure 2 shows a representation of the principle of the system of the proposed reception method, only one finger of the RAKE receiver being illustrated,
Figure 3 shows a block diagram of an embodiment, that is to say an implementation example, and

Figure 4 shows a signal diagram relating to figure 3.

A digitally coded double reception signal r(k) is received using the CDMA method in a RAKE receiver 1 of a mobile telephone in a fashion coded both using a code c0 and using a second code c1.

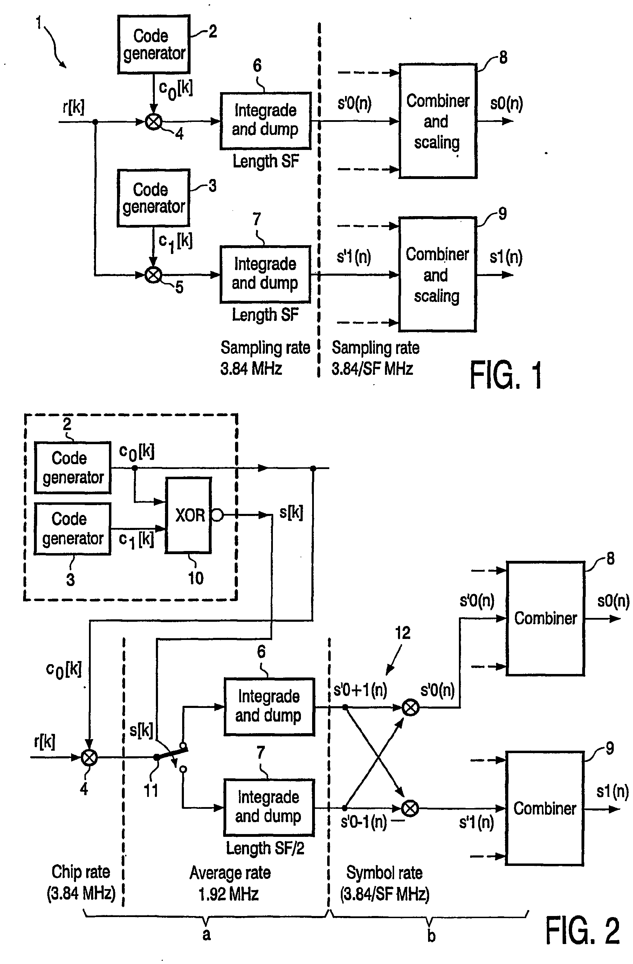

In the scheme according to figure 1, the receiver 1 has a code generator 2 for the code c0 and a code generator 3 for the code c1. The received signal r(k) is coded using the code c0 via a multiplier 4, and using the code c1 via a multiplier 5. The code generators 2 and 3 are controlled by that master station which sends the received signal r(k). In an integrate and dump filter block 6, the signal coded with the code c0 is processed with the spread factor SF using the code-division multiple access (CDMA) method. In an integrate and dump filter block 7, the other digital signal, coded with the code c1, is processed with the same spread factor SF. The sampling rate is, for example, 3.84 MHz (UMTS) and amounts to 3.84/SF MHz after processing in the filter block 6 or 7, that is to say to 0.96 MHz in the case of a spread factor SF = 4.

One output signal sO is obtained in a combiner block 8. The output signal s1 is obtained in a further combiner block 9. The partial signals of the other finger of the RAKE receiver 1 that also feature here are indicated by dashed lines.

In the case of the scheme according to figure 2, the code c0 of the code generator 2 is present at the multiplier 4, which multiplies the received signal r(k) by +1 or -1 according to the value of c0, and a negating XOR gate 10 (EXNOR). Also present at the gate 10 is the code c1 of the code generator 3. The output signal of the gate 10 is the switching signal s(k) for a switchover function 11 between the multiplier 4 and the integrate and dump filter block 6, as well as the integrate and dump filter block 7. The filter blocks 6 and 7 average (integration) over half the spread factor SF because they are effective only for half the time in each case via the switching signal s(k), and output the result with a correspondingly low data rate. The intermediate signal s'0+1(n), which is present on the added code combination c0+c1, occurs at the output of the filter block 6. The intermediate signal s'0-1(n), which is present on the subtracted code combination c0-c1, occurs at the output of the filter block 7.

In accordance with the bits which occur on the two codes c0(k) and c1(k), the following combinations of codes are, therefore, sent by the base station, thus yielding the following switching signal s(k):

| For bit 0 | Bit 1 | Sent code combination | s(k) |
|---|---|---|---|
| 0 | 0 | c0+c1 | 1 |
| 0 | 1 | c0-c1 | 0 |
| 1 | 0 | -c0 + c1 = -(c0 - c1) | 0 |
| 1 | 1 | -c0 - c1 = -(c0 + c1) | 1 |

The intermediate signal which is received on c0 + c1 is s'0+1(n). The intermediate signal, which is received on c0 - c1 is correspondingly s'0-1(n).

Granted, in the conventional method (compare figure 1), the code sums c0 + c1 and the code differences c0 - c1 are necessarily also received. However, these are not used, but immediately suppressed to the effect that the codes c0 and c1 are obtained.

By contrast, the following finding is utilized in the method according to figures 2, 3, 4:

1. Depending on the current value 0 and/or 1 of the bits, the code sum c0 + c1 has the value +/-2 or the value 0, the value 0 of the code sum making no contribution to the useful signal. Consequently, the switching signal s(k) can be used, and is used when the code sum is 0, to switch over from the filter block 6, which processes the code sums, to the other filter block 7, which processes the code differences.

2. A corresponding statement holds for the code differences. Depending on the current value 0 and/or 1 for the bits, the code difference c0 - c1 has the value +/-2 or the value 0, the value 0 of the code differences likewise making no contribution to the useful signal. Consequently, the switching signal s(k) can be used, and is used when the code difference is 0, to switch over from the filter block 7 to the filter block 6.

This finding yields the advantage offered by the method.

The bits originally sent with the code c0 or c1 that is to say the useful signals, can then be obtained by addition and subtraction simply by the following cross operation (butterfly operation) in the cross operator 12:

$$(c0 + c1) + (c0 - c1) = c0$$

$$(c0 + c1) - (c0 - c1) = c1$$

The bits and intermediate signals s'0(n) and s'1(n), respectively, referred to the code c0 and the code c1, respectively, are then present at the outputs of the cross operator 12. These intermediate signals are combined in the respectively assigned combiner block 8 or 9 to form the output signals s0 or s1, which correspond to the useful signals respectively sent on the code c0 or the code c1 by the base station.

If the chip rate at the multiplier 4 amounts, for example, to 3.84 MHz, the average rate in the case of the filter blocks 6, 7 amounts to half of this, that is to say 1.92 MHz, in accordance with the switchover between these blocks. The bit rate at the cross operator 12 amounts to 3.84/SF MHz, that is to say 0.96 MHz in the case of SF = 4, in accordance with the spread factor SF.

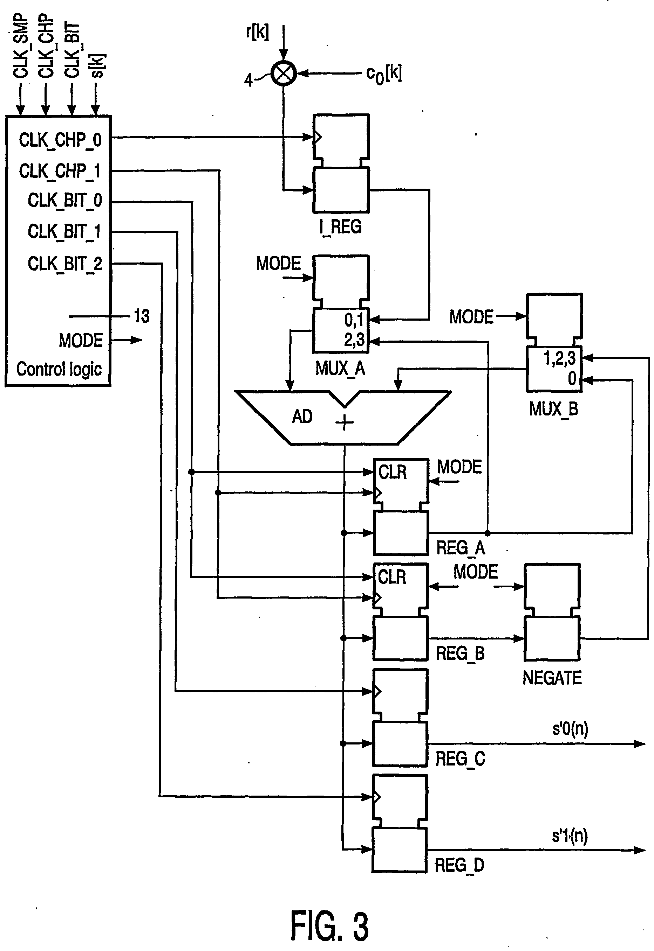

Figure 3 shows a possible implementation of a system comprising the function groups a and b (compare figure 2), which implementation comprises the switchover function 11, the filter blocks 6, 7 and the cross operator 12.

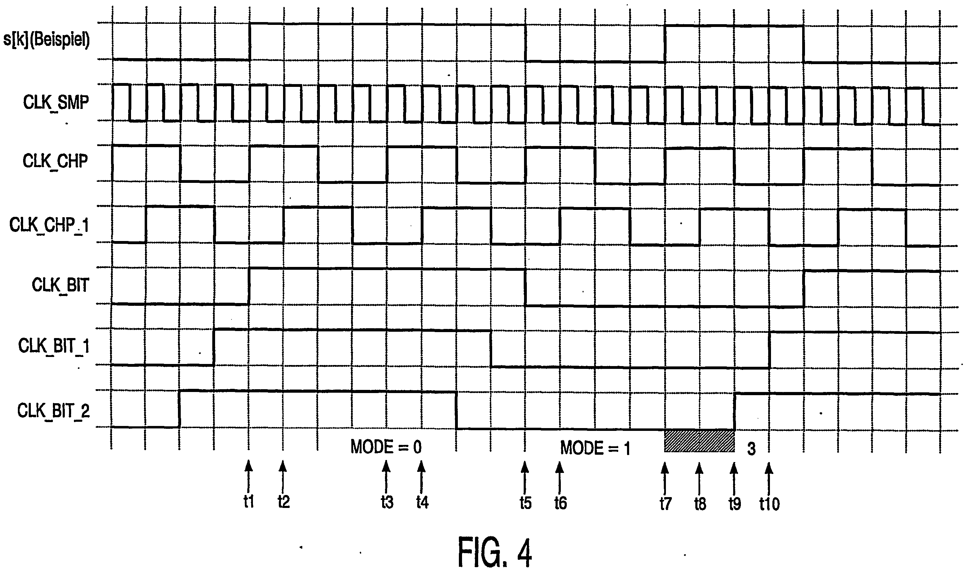

Characteristic signal sequences are illustrated in the signal diagram of figure 4.

A control logic 13 is provided in the embodiment according to figure 3. This operates with a plurality of input clocks, specifically as follows:

CLK_SMP: sampling rate (15.36 MHz)
CLK_CHP: chip timing (3.84 MHz)
CLK_BIT: bit timing (3.84 MHz/SF, in which case
SF = 4, 8, 16, 32, 64, 128, 256 or 512).

It is assumed in figure 4 that SF = 4.
A further input signal is the above-named switching signal s(k).
All the clocked blocks are assumed to be positively edge-triggered.

The control logic 13 derives internal auxiliary clocks therefrom:

CLK_CHP_0 = CLK_CHP
CLK_CHP_1 = CLK_CHP, delayed by a period of CLK_SMP
CLK_BIT_0 = CLK_BIT
CLK_BIT 1 = CLK_BIT, accelerated by a period of CLK_SMP
CLK_BIT_2 = CLK_BIT, accelerated by two periods of CLK_SMP.

Furthermore, a control signal MODE is generated, in which case

MODE = 0 signifies that the input values for s(k) = 1 are integrated;
MODE = 1 signifies that the input values for s(k) = 0 are integrated;
MODE = 2 signifies that the results of the two integrations are added (butterfly addition);
MODE = 3 signifies that the results of the two integrations are subtracted (butterfly subtraction).
MODE 0 and 1 are set during the integration. MODE 2 is set during the third period of CLK_SMP inside the last chip of the current symbol. MODE 3 is set during the fourth period of CLK_SMP.

A block I_REG is the input register of the system. In the case of a positive edge of the chip clock, the corresponding new input value is taken over into this input register.

A block MUX_A is a multiplexer which switches through to an input of the adder AD as a function of MODE register REG_A, REG_B. The input value is switched through for MODE = 0 and 1; by contrast, for MODE = 2 and 3 it is the result of the integration for c0(k) + c1(k) originating from the register REG_A or REG_B that is switched through.

The register REG_A is connected directly to the output of the adder AD. The register is reset with the positive edge of the bit clock (input CLR). The result of the addition in REG_A is taken over with the rising edge of CLK_CHP_1 if it holds that MODE = 0.

The register REG_B is connected directly to the output of the adder AD. The register is reset with the positive edge of the bit clock (input CLR). The result of the addition is taken over into REG_B with the rising edge of CLK_CHP_1 if it holds that MODE = 1.

A further register REG_C is connected directly to the output of the adder AD. The result of the addition is taken over into REG_C with the rising edge of CLK_BIT_1. The value in REG_C is then the signal received on code c0(k), and can be taken over with the next edge of CLK_BIT.

A further register REG_D is connected directly to the output of the adder AD. The result of the addition is taken over into REG-D with the rising edge of CLK_BIT_2. The value in REG_D is then the signal received on code c1(k), and can be taken over with the next edge of CLK_BIT.

A block NEGATE is a conditional negation of the contents of register REG_B. Negation is executed when MODE = 3 is selected, that is to say when the subtraction of the integrated values is to be executed (butterfly operation).

A block MUX_B is a multiplexer which switches through the register REG_A or REG_B to the input of the adder as a function of MODE. REG_A is switched through for MODE = 0; REG_B is switched through for all other values of MODE.

The principle of the method cycle in the case of the circuit according to figure 3 (compare figure 4) is as follows, for example:

Starting (instant t1) with the current bit (positive edge of CLK_BIT), the input values are taken over into the input register with the start of a chip (positive edge of CLK_CHP). It is the case here that 1 chip: 1bit/SF. The registers REG_A and REG_B are set to 0 with the start of the current symbol. On the occurrence of the next positive edge of CLK_SMP, the respective input values are added as a function of s(k) to REG_A or RBG_B (instants t2 to t8).

MODE = 0 is present between the instants t1 and t5. At instant t2, the first chip is added to the register REG_A. The second chip is taken over at instant t3 and added to the register REG_A at instant t4.

MODE = 1 occurs between the instants t5 and t7. The third chip is taken over at instant t5 and added to the register REG_B at instant t6. The fourth chip is taken over at instant t7 and added to the register REG_A at instant t8 while MODE = 0.

After the addition of the last input value of the current bit, the first step is for the two partial results from REG_A and REG_B to be added (MODE = 2) on the occurrence of the next positive edge at instant t9 of CLK_SMP, and to be written to REG_C. Thereafter, the two partial results are subtracted on the occurrence of the next positive edge (instant t10) and written to REG_D.

In the case of UMTS, complex symbols are transmitted, in a fashion separated by real part and imaginary part, from the base station to the mobile telephone. Each symbol thus corresponds to each time two bit sequences (QPSK).

The particular advantages of the methods described above with the aid of figures 2, 3 and 4 are as follows:

By contrast with the standard implementation according to figure 1, only one adder AD is required instead of two adders. Thus, one adder is spared per finger on the RAKE receiver. As each RAKE receiver has a plurality of fingers per code to be received, many adders can be saved, all in the RAKE receiver.

Nevertheless, the sole adder AD executes substantially fewer operations than in the case of the standard implementation. In the most favorable case, virtually 8 million additions can already be saved per second for two parallel channels; this is attended by a substantially lower power consumption of the mobile telephone.

It is assumed above, by way of example, that the mobile telephone is to process two codes c0 and c1. If the mobile telephone is to be able to process three or more codes, one RAKE receiver each is provided for two codes in the mobile telephone in the way described above. If, for example, four codes are to be processed, two RAKE receivers are required for this purpose.

The following table shows the percentage saving of operations in the case of M codes and various spread factors SF:

| SF: | 4 | 8 | 16 | 32 | 64 | 128 | 256 |
|-----|------|------|------|------|------|------|------|
| M: | | | | | | | |
| 2 | 25.0 | 37.5 | 43.7 | 46.8 | 48.4 | 49.2 | 49.6 |
| 3 | 0 | 16.6 | 25.0 | 29.1 | 31.2 | 32.2 | 32.8 |
| 4 | 25.0 | 37.5 | 43.7 | 46.8 | 48.4 | 49.2 | 49.6 |
| 5 | | 25.0 | 32.5 | 36.2 | 38.1 | 39.0 | 39.5 |
| 6 | | 37.5 | 43.7 | 46.8 | 48.4 | 49.2 | 49.6 |
| 7 | | 28.5 | 35.7 | 39.2 | 41.0 | 41.9 | 42.4 |
| 8 | | 37.5 | 43.7 | 46.8 | 48.4 | 49.2 | 49.6 |

For example, the table shows that there is a saving of 25% for two codes and the spread factor 4.

**Claims**

**1.** A reception method for a mobile telephone, in particular having a RAKE receiver, for multicode reception, based on the use of codes (c0, c1), of a useful signal, wherein sums (c0+ c1) of the codes and differences (c0-c1) of the codes are received and evaluated in such a way that they are alternately processed with a spread factor (SF), in a fashion controlled by a switching signal (s), to form intermediate signals (s'0+1; s'0-1), and wherein the useful signal bits (s'0 ; s'1) are recovered from the intermediate signals by a cross operation and said switching signal (s) is obtained from the codes (c0, c1) via a negating XOR function.

2. A reception method as claimed in claim 1, wherein the professing of the sums (c0+c1) of the codes and the differences (c0-c1) of the codes is performed using the code-division multiple access method.

3. A reception method as claimed in claim 1 or 2, wherein the cross operation is an addition and a subtraction.

4. A reception method as claimed in one of the preceding claims, wherein a received signal (r) containing the useful signal bits (s'0 ; s'1) is multiplied by a code (c0) and integrated and despread via a switchover function controlled by the switching signal (s).

5. A reception method as claimed in one of the preceding claims, wherein one RAKE receiver each is provided for two codes each in the case of three or more codes.

6. A mobile telephone having a reception device adapted to carry out the reception method as claimed in the claims 1 to 5, wherein the reception device is adapted to process the received sums (c0+c1) of the codes and the received differences (c0-c1) of the codes to form intermediate signals and is adapted to obtain the useful signal bits by means of a cross operator (12).

7. A mobile telephone as claimed in claim 6, wherein the reception device has a control logic (13) whereto a plurality of input clocks (CLKSMP, CLKCHP, CLKBIT) are applied and which generates therefrom auxiliary clocks (CLKCHP0, CLKCHP1, CLKBIT0, CLKBIT1, CLKBIT2) and a control signal (MODE), and wherein the reception device has an input register (IREG), multiplexers (MUX A, MUX B), an adder (AD) and further registers (REG A to REG D), the auxiliary clocks timing the input register (I~REG), and the further registers, and the control signal (MODE) controlling the multiplexers (MUX~A, MUX~B), and the multiplexers (MUX A, MUX B) being connected to the adder (AD), and the adder (AD) loading the further registers (REGA to REGD).

**Patentansprüche**

1. Empfangsverfahren für ein Mobiltelefon, insbesondere mit einem RAKE-Empfänger, für den Multicodeempfang auf Grundlage der Verwendung von Codes (c0, c1) eines Nutzsignals, bei welchem Summen (c0+c1) der Codes und Differenzen (c0-c1) der Codes empfangen werden und in solcher Weise ausgewertet werden, dass sie alternierend mit einem Spreizfaktor (SF) verarbeitet werden, gesteuert durch ein Schaltsignal (s), um Zwischensignale (s'0+1; s'0-1) auszubilden, wobei die Nutzsignalbits (s'0; s'1) aus den Zwischensignalen über eine Kreuzoperation gewonnen werden und das Schaltsignal (s) aus den Codes (c0, c1) über eine negierende XOR-Funktion gewonnen wird.

2. Empfangsverfahren nach Anspruch 1, bei welchem das Verarbeiten der Summen (c0+c1) der Codes und der Differenzen (c0-01) der Codes unter Verwendung des CDMA-Verfahrens erfolgt.

3. Empfangsverfahren nach Anspruch 1 oder 2 bei welchem die Kreuzoperation eine Addition und eine Subtraktion ist.

4. Empfangsverfahren nach einem der vorangehenden Ansprüche, bei welchem ein empfangenes Signal (r), welches die Nutzsignalbits (s'0; s'1) umfasst, mit einem Code (c0) multipliziert und integriert wird und über eine Umschaltfunktion, welche mittels des Schaltsignals (s) gesteuert wird, entspreizt wird.

5. Empfangsverfahren nach einem der vorangehenden Ansprüche, bei welchem im Fall von drei oder mehr Codes jeweils ein RAKE-Empfänger für zwei Codes bereitgestellt wird.

6. Mobiltelefon mit einer Empfangsvorrichtung, welche dazu eingerichtet ist, das Empfangsverfahren nach einem der Ansprüche 1 bis 5 auszuführen, wobei die Empfangsvorrichtung dazu eingerichtet ist, die empfangenen Summen (c0+c1) der Codes und die empfangenen Differenzen (c0-c1) der Codes zu verarbeiten, um Zwischensignale auszubilden, und ferner dazu eingerichtet ist, die Nutzsignalbits mittels eines Kreuzoperators (12) zu erhalten.

7. Mobiltelefon nach Anspruch 6, bei welchem die Empfangsvorrichtung eine Steuerungslogik (13) aufweist, auf welche mehrere Eingangstaktsignale (CLKSMP, CLKCHP, CLKBIT) angewendet werden und welche daraus Hilfstaktsignale (CLKCHP0, CLKCHP1, CLKBIT0, CLKBIT1, CLKBIT2) sowie ein Steuersignal (MODE) erzeugt, wobei die Empfangsvorrichtung ein Eingangsregister (IREG), Multiplexer (MUX A, MUX B), einen Addierer (AD) und weitere Register (REG A bis REG D) aufweist, wobei die Hilfstaktsignale das Eingangsregister (1~REG) und die weiteren Register takten und das Steuersignal (MODE) die Multiplexer (MUX-A, MUX~B) steuert, wobei die Multiplexer (MUX A, MUX B) mit dem Addierer (AD) verbunden sind und wobei der Addierer (AD) die weiteren Register (REGA bis REGD) lädt.

## Revendications

1. Procédé de réception d'un téléphone mobile, en particulier qui présente un récepteur RAKE, destiné à une réception multicode d'un signal utile, basée sur l'utilisation de codes (c0, c1), dans lequel les sommes des codes (c0 + c1) et les différences des codes (c0 - c1) sont reçues et évaluées de telle manière qu'elles soient traitées de façon alternée avec un facteur d'étalement (SF), d'une manière commandée par un signal de commutation (s), de façon à former des signaux intermédiaires (s'0 + 1 ; s'0 - 1), et dans lequel les bits de signal utile (s'0 ; s'1) sont récupérés à partir des signaux intermédiaires par une opération croisée et ledit signal de commutation (s) est obtenu à partir des codes (c0, c1) par l'intermédiaire d'une fonction XOR barre.

2. Procédé de réception selon la revendication 1, dans lequel le traitement des sommes des codes (c0 + c1) et des différences des codes (c0 - c1), est exécuté à l'aide d'un procédé d'accès multiple par répartition en code.

3. Procédé de réception selon la revendication 1 ou la revendication 2, dans lequel l'opération croisée est une addition et une soustraction.

4. Procédé de réception selon l'une quelconque des revendications précédentes, dans lequel un signal reçu (r) qui contient les bits de signal utiles (s'0 ; s'1), est multiplié par un code (c0) et intégré et désétalé par l'intermédiaire d'une fonction de commutation commandée par le signal de commutation (s).

5. Procédé de réception selon l'une quelconque des revendications précédentes, dans lequel plusieurs récepteurs RAKE sont prévus dans le cas de trois codes ou plus, un récepteur RAKE étant prévu pour deux codes.

6. Téléphone mobile présentant un dispositif de réception adapté pour exécuter le procédé de réception selon l'une quelconque des revendications 1 à 5, dans lequel le dispositif de réception est adapté pour traiter les sommes des codes reçues (c0 + c1) et les différences des codes reçues (c0 - c1) de façon à former des signaux intermédiaires, et il est adapté pour obtenir les bits de signal utile au moyen d'un opérateur croisé (12).

7. Téléphone mobile selon la revendication 6, dans lequel le dispositif de réception présente une logique de commande (13) à laquelle sont appliquées une pluralité d'horloges d'entrée (CLKSMP, CLKCHP, CLKBIT), et qui génère à partir de celles-ci des horloges auxiliaires (CLKCHP0 CLKCHP1, CLKBIT0, CLKBIT1, CLKBIT2) et un signal de commande (MODE), et dans lequel le dispositif de réception présente un registre d'entrée (IREG), des multiplexeurs (MUX A, MUX B), un additionneur (AD) et d'autres registres (REG A à REG D), les horloges auxiliaires synchronisant le registre d'entrée (I~REG), et les autres registres, et le signal de commande (MODE) commandant les multiplexeurs (MUX-A, MUX~B), et les multiplexeurs (MUX A, MUX B) étant connectés à l'additionneur (AD), et l'additionneur (AD) chargeant les autres registres (REG A à REG D).

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0661831 A

- EP 0642243 A

**Non-patent literature cited in the description**

- **NIELS KLUßMANN.** *Lexikon der Kommunikations- und Informationstechnik,* 1997, 72-73